(19) Europäisches Patentamt
European Patent Office
Office européen des brevets

(11) **EP 3 729 720 B1**

(12) **FASCICULE DE BREVET EUROPEEN**

(45) Date de publication et mention
de la délivrance du brevet:
**04.12.2024 Bulletin 2024/49**

(21) Numéro de dépôt: **18833965.9**

(22) Date de dépôt: **18.12.2018**

(51) Classification Internationale des Brevets (IPC):
**H04L 9/32** (2006.01)

(52) Classification Coopérative des Brevets (CPC):
**H04L 9/3255**

(86) Numéro de dépôt international:
**PCT/FR2018/053363**

(87) Numéro de publication internationale:
**WO 2019/122679 (27.06.2019 Gazette 2019/26)**

(54) **PROCÉDÉ CRYPTOGRAPHIQUE DE SIGNATURE DE GROUPE**

KRYPTOGRAFISCHES VERFAHREN ZUR GRUPPENSIGNATUR

CRYPTOGRAPHIC METHOD FOR GROUP SIGNATURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2017 FR 1762480**

(43) Date de publication de la demande:
**28.10.2020 Bulletin 2020/44**

(73) Titulaire: **Orange**
**92130 Issy-les-Moulineaux (FR)**

(72) Inventeur: **SANDERS, Olivier**
**92326 Châtillon Cedex (FR)**

(74) Mandataire: **Cabinet Beau de Loménie**
**158, rue de l'Université**
**75340 Paris Cedex 07 (FR)**

(56) Documents cités:
- **LAN NGUYEN ET AL: "Efficient and Provably Secure Trapdoor-free Group Signature Schemes from Bilinear Pairings", INTERNATIONAL ASSOCIATION FOR CRYPTOLOGIC RESEARCH,, vol. 20050501:081915, 27 April 2005 (2005-04-27), pages 1 - 28, XP061001172**
- **LAILA EL AIMANI ET AL: "Efficient Group Signatures in the Standard Model", INTERNATIONAL ASSOCIATION FOR CRYPTOLOGIC RESEARCH,, vol. 20121126:102332, 26 November 2012 (2012-11-26), pages 1 - 23, XP061006983**
- **DAVID DERLER ET AL: "Fully-Anonymous Short Dynamic Group Signatures Without Encryption", INTERNATIONAL ASSOCIATION FOR CRYPTOLOGIC RESEARCH,, vol. 20160928:105941, 28 September 2016 (2016-09-28), pages 1 - 30, XP061021843**

**EP 3 729 720 B1**

## Description

Arrière-plan de l'invention

L'invention se rapporte au domaine général des télécommunications et concerne plus particulièrement la sécurisation des échanges entre des dispositifs de communication à l'aide de techniques cryptographiques telles que des techniques de signature électronique.

Le développement croissant de l'Internet des Objets (IoT) où de multiples objets communicants de toute nature (ex. cartes à puce, téléphones intelligents, capteurs, etc.), souvent de faible puissance, communiquent directement entre eux soulèvent des problèmes de sécurité considérables. En effet, ce nouveau modèle n'est plus compatible avec les architectures centralisées classiques où une autorité intervient dans toutes les communications pour garantir l'authenticité des échanges.

Une solution consiste à utiliser des techniques standards de signature électronique. Ceci a toutefois pour conséquence de rendre possible l'identification et le traçage des objets les utilisant. Ce problème est loin d'être anodin pour les fabricants de ces objets, car ils doivent alors s'assurer que les objets qu'ils produisent respectent bien la règlementation des pays où ils seront commercialisés en matière de protection des données personnelles. Or, ces réglementations tendent à être de plus en plus sévères, comme l'illustre le règlement général sur la protection des données (ou GDPR pour General Data Protection Régulation) récemment adopté au sein de l'union européenne.

Dans ce contexte, les mécanismes cryptographiques d'authentification anonyme se révèlent particulièrement intéressants. Ces derniers garantissent à la fois l'authentification de l'objet communicant (« il s'agit bien d'un objet communicant valide produit par le fabriquant X ») mais aussi son in-traçabilité (il n'est pas possible, sauf éventuellement pour une entité spécifique, d'identifier l'objet en question), ce qui assure leur compatibilité avec les différentes réglementations sur la protection des données personnelles. Ces mécanismes, et notamment les mécanismes DAA (pour Direct Anonymous Attestation) d'attestation anonyme directe et EPID (pour Enhanced Privacy ID), rencontrent un fort succès aujourd'hui : les DAA sont déployées dans plus de 500 millions d'ordinateurs portables tandis que les EPID sont utilisés dans plus de 2 milliards de processeurs.

Ces mécanismes d'authentification anonyme s'appuient pour la plupart sur un outil cryptographique particulier appelé « signature de groupe ». La signature de groupe permet aux membres d'un groupe prédéfini d'émettre des signatures sur n'importe quel message avec la garantie de rester anonyme au sein du groupe. Plus concrètement, étant donnée une signature de groupe valide, il est impossible, même pour les membres du groupe (autre que le signataire lui-même) de savoir lequel d'entre eux l'a émise. Néanmoins, pour éviter les abus, il est possible de donner à une certaine entité, appelée généralement autorité d'ouverture, la capacité de lever l'anonymat de n'importe quel signature de groupe.

Ces différentes propriétés font d'une signature de groupe un objet relativement complexe. Leurs nombreuses applications potentielles ont toutefois suscité un immense intérêt au sein de la communauté cryptographique qui s'est traduit par l'amélioration progressive les performances des signatures de groupes.

La plupart des techniques de signature de groupe suivent le même principe de construction, formalisé par Bellare et al : chaque signature de groupe S contient un certificat du signataire masqué soit par du chiffrement, soit par des techniques de régénération, ainsi qu'une preuve de connaissance non-interactive garantissant que la signature S est bien formée. Elle fait appel à des opérations plus ou moins complexes réalisées dans un groupe bilinéaire comprenant un ensemble de trois groupes cycliques G1, G2 et GT et un couplage bilinéaire e : G1xG2->GT.

La complexité d'une signature de groupe (en termes de calcul et de dimension) résulte ainsi de la complexité du certificat qu'elle contient à laquelle s'ajoute la complexité de la preuve de connaissance. Les seules preuves de connaissance non-interactives de l'état de la technique réellement efficaces utilisent le modèle idéalisé de l'oracle aléatoire (ROM), dont les limites en termes de sécurité sont notoires. Ces limites se transposent donc également aux signatures de groupes qui en font usage.

Le document LAN NGUYEN ET AL « Efficient and Provably Trapdoorfree Group Signature Schemes from Bilinear Pairings » du 27 avril 2005 décrit un procédé cryptographique de signature d'un message par un dispositif utilisateur au nom d'un groupe géré par un gestionnaire de groupe possesseur d'une clé secrète.

Le document de Pointcheval et Sanders intitulé « Short Randomizable Signature », Proceedings of the Cryptographers Track, RSA Conference, 29 février - 4 mars 2016, décrit un schéma de signature de groupe très efficace. Selon ce schéma, chaque signature de groupe comporte deux éléments de groupe ainsi que 2 scalaires de même taille. La génération de la signature implique l'évaluation d'un couplage bilinéaire ou une exponentiation dans le groupe GT. Ces deux opérations sont très coûteuses et nécessitent d'utiliser une arithmétique relativement complexe dans des corps finis non premiers. Ces contraintes peuvent malheureusement être bloquantes pour des objets communicants de faible puissance.

Il existe donc un besoin d'un mécanisme de signature de groupe efficace en termes de sécurité et moins complexe que le schéma de Pointcheval et Sanders, afin de permettre son implémentation dans des objets communicants disposant de capacités en termes de puissance de calcul limitées.

## Objet et résumé de l'invention

L'invention répond notamment à ce besoin en proposant un procédé cryptographique de signature selon la revendication 1 d'un message m, par un dispositif utilisateur, au nom d'un groupe, ce groupe étant géré par un gestionnaire de groupe ayant une clé secrète générée à partir de deux aléas x et y, le groupe ayant une clé publique formée d'une pluralité d'éléments comprenant un élément g et un élément $g^z$ appartenant à un groupe cyclique G1 d'ordre p, p désignant un nombre entier premier et z un aléa, et un élément h, un élément $h^x$, élément $h^{1/z}$ et un élément $h^{y/z}$ appartenant à un groupe cyclique G2 d'ordre p.

Corrélativement, l'invention vise aussi un dispositif utilisateur selon la revendication 10 apte à signer un message m au nom d'un groupe, ce groupe étant géré par un gestionnaire de groupe ayant une clé secrète générée à partir de deux aléas x et y, le groupe ayant une clé publique formée d'une pluralité d'éléments comprenant un élément g et un élément $g^z$ appartenant à un groupe cyclique G1 d'ordre p, p désignant un nombre entier premier et z un aléa, et un élément h, un élément $h^x$, un élément $h^{1/z}$ et un élément $h^{y/z}$ appartenant à un groupe cyclique G2 d'ordre p.

Le nouveau mécanisme de signature de groupe proposé par l'invention permet de générer une signature de groupe qui ne contient pas de preuve de connaissance non-interactive, ce qui se traduit par un gain notable en termes de complexité par rapport aux schémas de signature de groupe de l'état de la technique. Seule une preuve de connaissance interactive est requise lors de l'établissement de la signature de groupe, qui peut être aisément mise en oeuvre par exemple au moyen d'un algorithme connu de Schnorr. Ceci est permis grâce à une légère modification du certificat fourni par le gestionnaire du groupe (élévation à la puissance u, u désignant le secret choisi par l'utilisateur dont il prouve la connaissance auprès du gestionnaire du groupe) et au masquage proposé de ce certificat grâce à l'aléa t dans la signature générée.

Le procédé de signature de l'invention propose ainsi les signatures de groupe les plus courtes de l'état de la technique : les signatures de groupe générées par l'invention contiennent en effet uniquement trois éléments du groupe G1, ce qui se traduit par un gain de 25% en termes de dimension par rapport aux signatures générées par le schéma de Pointcheval et Sanders.

En outre, la génération des signatures de groupe au moyen de l'invention ne nécessite avantageusement aucun couplage ni exponentiation dans le groupe GT, opérations connues pour être très coûteuses en termes de ressources de calcul et très complexes.

Le mécanisme proposé répond en outre à toutes les contraintes fixées en termes de sécurité à une signature de groupe : la signature générée assure l'anonymat de son signataire et son in-traçabilité. Elle peut être ouverte par une autorité d'ouverture dédiée et être vérifiée aisément, comme décrit plus en détail ultérieurement.

L'invention propose donc un mécanisme de signature de groupe qui peut être implémenté de façon très simple et efficace dans tous les systèmes d'authentification anonymes reposant sur un algorithme de signature de groupe. La réduction de la taille des signatures de groupe générées par rapport à l'état de la technique et surtout l'absence d'opération complexe lors de la génération de ces signatures font de cette invention une solution particulièrement bien adaptée à des objets communicants disposant de capacités de calcul limitées. Toutefois, l'invention ne se limite pas à ce type d'objets et peut être appliquée dans de nombreux domaines.

Le procédé comprend une étape de calcul d'un élément S3' à partir de l'élément S3 du certificat fourni par le gestionnaire du groupe en élevant l'élément S3 à la puissance u, ledit élément T3 étant calculé lors de l'étape de génération de la signature en élevant l'élément S3' calculé lors de l'étape de calcul à la puissance t.

Cette étape intermédiaire de calcul offre la possibilité de mutualiser un maximum des opérations requises pour la génération d'une signature de groupe : le dispositif utilisateur peut réaliser ces opérations une unique fois pour toutes les signatures de groupe qu'il générera par la suite. Ceci permet d'améliorer l'efficacité du schéma de signature proposée, notamment en termes de rapidité d'exécution, et de réduire encore davantage la complexité requise au niveau du dispositif utilisateur pour mettre en oeuvre ce schéma.

Dans un mode particulier de réalisation, la clé secrète du gestionnaire du groupe est formée des aléas x et y et, pour prouver au gestionnaire du groupe la connaissance du secret u, le dispositif utilisateur envoie au gestionnaire du groupe l'élément $g^u$.

Ce mode de réalisation est particulièrement simple à mettre en oeuvre et efficace. Comme mentionné précédemment, l'invention s'appuie sur une preuve de connaissance interactive, qui peut être réalisée pour un secret déterminé une unique fois tout en offrant la possibilité du dispositif utilisateur de générer une pluralité de signatures de groupe s'appuyant sur cette preuve de connaissance.

Ce n'est toutefois pas le seul mode de réalisation qui peut être envisagé, et d'autres implémentations de cette preuve de connaissance peuvent être mises en oeuvre.

Ainsi, par exemple, dans un autre mode de réalisation, la clé secrète du gestionnaire de groupe est formée des éléments $g^x$ et $g^y$ et, pour prouver au gestionnaire du groupe la connaissance du secret u, le dispositif utilisateur :

- reçoit du gestionnaire du groupe l'élément $g^y$ ; et
- calcule et envoie au gestionnaire du groupe l'élément $(g^y)^u$.

Comme mentionné précédemment, différents algorithmes connus peuvent être utilisés par le dispositif utilisateur pour prouver au gestionnaire du groupe la connaissance du secret u. Ainsi, par exemple, le dispositif utilisateur peut utiliser à cet effet l'algorithme de Schnorr, bien connu de l'homme du métier. Celui-ci permet une implémentation particulièrement efficace du procédé de signature de groupe selon l'invention.

L'invention propose donc un schéma de signature de groupe particulièrement efficace en termes de sécurité et de complexité. A cet effet, elle s'appuie non seulement sur la génération à proprement parler de la signature de groupe par le dispositif utilisateur, mais également sur la fourniture par le dispositif gestionnaire du groupe d'un certificat formé d'éléments judicieusement choisis.

Ainsi, selon un autre aspect, l'invention vise également un procédé cryptographique de fourniture d'un certificat par un gestionnaire d'un groupe selon la revendication 5 à un dispositif utilisateur rejoignant le groupe, ledit gestionnaire de groupe ayant une clé secrète générée à partir de deux aléas x et y, ledit groupe ayant une clé publique formée d'une pluralité d'éléments comprenant un élément g et un élément $g^z$ appartenant à un groupe cyclique G1 d'ordre p, p désignant un nombre entier premier et z un aléa, et un élément h, un élément $h^x$, un élément $h^{1/z}$ et un élément $h^{y/z}$ appartenant à un groupe cyclique G2 d'ordre p.

Corrélativement, l'invention concerne aussi un dispositif gestionnaire d'un groupe de dispositifs utilisateurs, selon la revendication 11, ledit gestionnaire de groupe ayant une clé secrète générée à partir de deux aléas x et y, ledit groupe ayant une clé publique formée d'une pluralité d'éléments comprenant un élément g et un élément $g^z$ appartenant à un groupe cyclique G1 d'ordre p, p désignant un nombre entier premier et z un aléa, et un élément h, un élément $h^x$, un élément $h^{1/z}$ et un élément $h^{y/z}$ appartenant à un groupe cyclique G2 d'ordre p.

Comme mentionné précédemment, la signature de groupe proposée par l'invention répond à toutes les contraintes imposées à une signature de groupe en matière de sécurité (anonymat et in-traçabilité). Elle peut notamment être vérifiée par un dispositif de vérification et être ouverte par une autorité d'ouverture si nécessaire.

L'invention vise donc aussi un procédé cryptographique de vérification d'une signature de groupe selon la revendication 6 comprenant trois éléments T1, T2 et T3, et générée pour un message m par un dispositif utilisateur appartenant à un groupe de dispositifs utilisateurs en utilisant un procédé cryptographique de signature selon l'invention, le groupe ayant une clé publique formée d'une pluralité d'éléments comprenant un élément g et un élément $g^z$ appartenant à un groupe cyclique G1 d'ordre p, p désignant un nombre entier premier et z un aléa, et un élément h, un élément $X=h^x$, un élément $Z'=h^{1/z}$ et un élément $Y'=h^{y/z}$ appartenant à un groupe cyclique G2 d'ordre p, x et y désignant des aléas utilisés pour générer une clé privée d'un gestionnaire du groupe.

Corrélativement, l'invention concerne également un dispositif de vérification selon la revendication 12, configuré pour vérifier une signature de groupe comprenant trois éléments T1, T2 et T3, et générée pour un message m par un dispositif utilisateur selon l'invention appartenant à un groupe de dispositifs utilisateurs, ledit groupe ayant une clé publique formée d'une pluralité d'éléments comprenant un élément g et un élément $g^z$ appartenant à un groupe cyclique G1 d'ordre p, p désignant un nombre entier premier et z un aléa, et un élément h, un élément $X=h^x$, un élément $Z'=h^{1/z}$ et un élément $Y'=h^{y/z}$ appartenant à un groupe cyclique G2 d'ordre p, x et y désignant des aléas utilisés pour générer une clé privée d'un gestionnaire du groupe conforme à l'invention.

L'invention propose par ailleurs un procédé cryptographique d'ouverture d'une signature de groupe selon la revendication 7 comprenant trois éléments T1, T2 et T3, et générée pour un message m par un dispositif utilisateur dit originaire appartenant à un groupe de dispositifs utilisateurs en utilisant un procédé cryptographique de signature selon l'invention, le groupe ayant une clé publique formée d'une pluralité d'éléments comprenant un élément g et un élément $g^z$ appartenant à un groupe cyclique G1 d'ordre p, p désignant un nombre entier premier et z un aléa, et un élément h, un élément $X=h^x$, un élément $Z'=h^{1/z}$ et un élément $Y'=h^{y/z}$ appartenant à un groupe cyclique G2 d'ordre p, x et y désignant des aléas utilisés pour générer une clé privée d'un gestionnaire du groupe.

Il convient de noter, qu'en raison des propriétés du couplage bilinéaire e, l'égalité des deux termes $e(T3,Z')$ et $e(T1,h^u)$ n'est vérifiée que pour un unique dispositif utilisateur du groupe.

Corrélativement, elle propose aussi un dispositif d'ouverture configuré pour ouvrir une signature de groupe selon la revendication 13 comprenant trois éléments T1, T2 et T3, et générée pour un message m par un dispositif utilisateur dit originaire appartenant à un groupe de dispositifs utilisateurs de l'invention, ledit groupe ayant une clé publique formée d'une pluralité d'éléments comprenant un élément g et un élément $g^z$ appartenant à un groupe cyclique G1 d'ordre p, p désignant un nombre entier premier et z un aléa, et un élément h, un élément $X=h^x$, un élément $Z'=h^{1/z}$ et un élément $Y'=h^{y/z}$ appartenant à un groupe cyclique G2 d'ordre p, x et y désignant des aléas utilisés pour générer une clé privée d'un gestionnaire du groupe conforme à l'invention.

Ce système de communication peut comprendre en outre un dispositif de vérification selon l'invention et/ou un dispositif d'ouverture selon l'invention.

Le procédé de fourniture d'un certificat et le dispositif gestionnaire de groupe apte à mettre en oeuvre ce procédé, le procédé de vérification et le dispositif de vérification apte à mettre en oeuvre ce procédé, le procédé d'ouverture et le dispositif d'ouverte apte à mettre en oeuvre ce procédé, et le système de communication proposés par l'invention, bénéficient des mêmes avantages décrits précédemment que le procédé cryptographique de signature et le dispositif utilisateur selon l'invention.

On peut également envisager, dans d'autres modes de réalisation, que le procédé cryptographique de signature, le procédé de fourniture, le procédé de vérification, le procédé d'ouverture, le dispositif utilisateur, le dispositif gestionnaire de groupe, le dispositif de vérification, le dispositif d'ouverture et le système de communication selon l'invention présentent en combinaison tout ou partie des caractéristiques précitées.

Dans un mode particulier de réalisation, les différentes étapes du procédé de signature, le procédé de fourniture, le procédé de vérification et/ou le procédé d'ouverture sont déterminées par des instructions de programmes d'ordinateurs.

En conséquence, l'invention vise aussi un programme d'ordinateur sur un support d'informations, susceptible d'être mis en oeuvre dans un dispositif utilisateur ou plus généralement dans un ordinateur, ce programme comportant des instructions adaptées à la mise en oeuvre des étapes d'un procédé de signature tel que décrit ci-dessus, ainsi :

- qu'un programme d'ordinateur susceptible d'être mis en oeuvre dans un dispositif gestionnaire d'un groupe ou plus généralement dans un ordinateur, ce programme comportant des instructions adaptées à la mise en oeuvre des étapes d'un procédé de fourniture tel que décrit ci-dessus ;
- un programme d'ordinateur susceptible d'être mis en oeuvre dans un dispositif de vérification ou plus généralement dans un ordinateur, ce programme comportant des instructions adaptées à la mise en oeuvre des étapes d'un procédé de vérification tel que décrit ci-dessus ; et
- un programme d'ordinateur susceptible d'être mis en oeuvre dans un dispositif d'ouverture ou plus généralement dans un ordinateur, ce programme comportant des instructions adaptées à la mise en oeuvre des étapes d'un procédé d'ouverture tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

Dans un autre mode de réalisation, les différentes étapes des procédés de génération, de fourniture, de vérification et/ou d'ouverture sont implémentées par une puce en silicium qui comprend des transistors adaptés pour constituer des portes logiques d'une logique câblée non programmable.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente, dans son environnement, un système de communication conforme à l'invention dans un mode particulier de réalisation ;
- la figure 2 représente l'architecture matérielle de dispositifs utilisateurs d'un groupe, d'un dispositif gestionnaire du groupe, d'un dispositif de vérification et d'un dispositif d'ouverture du système de communication de la figure 1 ;
- la figure 3 représente les étapes d'un procédé de fourniture d'un certificat selon l'invention dans un mode particulier de réalisation ;
- la figure 4 représente les étapes d'un procédé de signature selon l'invention dans un mode particulier de réalisation ;
- la figure 5 représente les étapes d'un procédé de vérification d'une signature de groupe selon l'invention dans un mode particulier de réalisation ; et
- la figure 6 représente les étapes d'un procédé d'ouverture d'une signature de groupe selon l'invention, dans un mode particulier de réalisation.

Description détaillée de l'invention

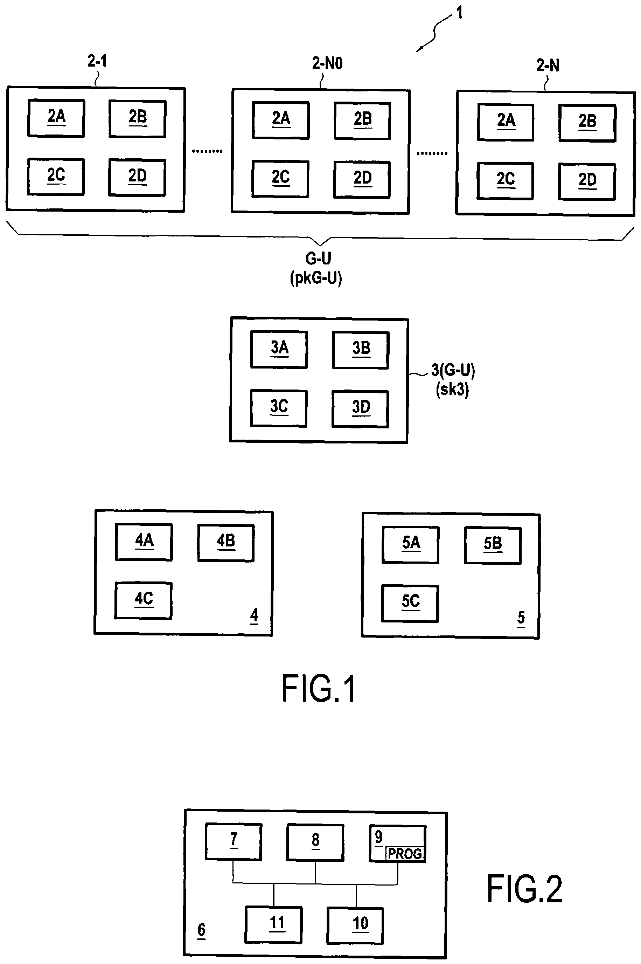

La **figure 1** représente, dans son environnement, un système de communication 1 conforme à l'invention, dans un mode particulier de réalisation.

Ce système 1 comprend ici une pluralité de dispositifs utilisateurs 2-1, 2-2, ..., 2-N conformes à l'invention, où N désigne un nombre entier supérieur ou égal à 1. Aucune limitation n'est attachée à la nature de ces dispositifs utilisateurs : il peut s'agir de tout type de dispositif de communication ou objet communicant (ex. capteur, téléphones intelligents, ordinateurs, etc.). L'invention a une application privilégiée mais non limitative dans le domaine de l'Internet des Objets (IoT).

Les dispositifs utilisateurs 2-1, 2-2, ..., 2-N forment ici un groupe d'utilisateurs désigné par G-U, géré par un dispositif gestionnaire du groupe 3, chaque dispositif utilisateur étant en mesure, grâce à l'invention, de signer tout ou partie de ses communications au moyen d'une signature de groupe. Une telle signature de groupe présente l'avantage de permettre à chaque dispositif utilisateur de signer au nom du groupe tout en préservant son anonymat et son in-traçabilité.

Pour permettre la génération d'une telle signature, le groupe dispose d'une clé cryptographique publique, désignée par pkG-U. Le dispositif gestionnaire du groupe 3 dispose par ailleurs pour enrôler notamment de nouveaux dispositifs utilisateurs au sein du groupe G-U, d'une clé cryptographique secrète désignée par sk3.

Dans le mode de réalisation décrit ici, le système de communication 1 comprend également :

- un dispositif de vérification 4, capable de vérifier les signatures de groupe émises au nom du groupe G-U par chacun des dispositifs utilisateurs 2-1, 2-2,..., 2-N. Dans l'exemple envisagé à la figure 1, ce dispositif de vérification 4 est un dispositif tiers, extérieur au groupe G-U. Toutefois, en variante, ce dispositif de vérification 4 peut être intégré dans chacun des dispositifs utilisateurs 2-n, n=1,...,N du groupe G-U afin de permettre aux dispositifs utilisateurs de vérifier les communications provenant d'autres dispositifs utilisateurs du groupe ; et
- une autorité (ou dispositif) d'ouverture 5, seule capable ici de lever l'anonymat d'une signature de groupe générée par l'un des dispositifs utilisateurs 2-n, n=1,...,N.

Aucune limitation n'est attachée à la nature du dispositif de vérification 4 et de l'autorité d'ouverture 5. Il peut s'agir de tout type de dispositif de communication (ex. ordinateurs, téléphone intelligent, etc.).

Dans le mode de réalisation décrit ici, les dispositifs utilisateurs 2-n, n=1,...,N, le dispositif gestionnaire du groupe 3, le dispositif de vérification 4 et l'autorité d'ouverture 5 ont tous l'architecture matérielle d'un ordinateur 6, tel que représenté schématiquement à **la figure 2.**

L'ordinateur 6 comprend notamment un processeur 7, une mémoire morte 8, une mémoire vive 9, une mémoire non volatile 10 et des moyens de communication 11. Ces moyens de communication 11 permettent aux dispositifs utilisateurs, au dispositif de vérification et à l'autorité d'ouverture de communiquer entre eux notamment. Ils peuvent comprendre une ou plusieurs interfaces de communication sur un ou plusieurs réseaux de télécommunication (fixes ou mobiles, avec ou sans fil, etc.).

La mémoire morte 8 de l'ordinateur 6 constitue un support d'enregistrement conforme à l'invention, lisible par le processeur et sur lequel est enregistré un programme d'ordinateur conforme à l'invention, désigné de façon générale ici par PROG, comportant des instructions pour l'exécution de l'un des procédés objets de l'invention, suivant le dispositif considéré. Ainsi :

- pour les dispositifs utilisateurs 2-1,...,2-N, le programme PROG est un programme PROG2 comportant des instructions pour l'exécution des étapes du procédé cryptographique de signature selon l'invention ;
- pour les dispositifs gestionnaire du groupe 3, le programme PROG est un programme PROG3 comportant des instructions pour l'exécution des étapes du procédé cryptographique de fourniture d'un certificat selon l'invention ;
- pour le dispositif de vérification 4, le programme PROG est un programme PROG4 comportant des instructions pour l'exécution des étapes du procédé cryptographique de vérification d'une signature de groupe selon l'invention ; et
- pour l'autorité d'ouverture 5, le programme PROG est un programme PROG5 comportant des instructions pour l'exécution des étapes du procédé cryptographique d'ouverture d'une signature de groupe selon l'invention.

Chacun de ces programmes définit, de façon équivalente, des modules fonctionnels du dispositif sur lequel il est installé, aptes à mettre en oeuvre les étapes du procédé concerné et s'appuyant sur les éléments matériels 7-11 de l'ordinateur 6.

Ainsi, le programme PROG2 définit les modules fonctionnels de chaque dispositif utilisateur 2-n, n=1,...,N, et plus particulièrement ici :

- un module de sélection 2A configuré pour choisir, lors de son enrôlement dans le groupe G-U auprès du dispositif gestionnaire du groupe 3, un secret u(n) lui permettant de générer une signature de groupe et qu'il garde secret à l'égard des autres dispositifs ;
- un module de preuve 2B, configuré pour prouver au dispositif gestionnaire du groupe 3 une connaissance du secret u(n) ;
- un module de réception 2C, activé après que le module de preuve a prouvé au dispositif gestionnaire du groupe 3 sa connaissance du secret u(n), un certificat C(2-n) fourni par le dispositif gestionnaire du groupe 3 et composé de trois éléments S1, S2, S3, décrits plus en détail ultérieurement ; et
- un module de génération 2D, configuré pour générer une signature de groupe (i.e. au nom du groupe G-U) pour un message quelconque m, à partir du certificat (S1,S2,S3) fourni par le dispositif gestionnaire du groupe 3, cette signature de groupe notée SIG(m) comprenant elle-même trois éléments T1, T2 et T3 décrits plus en détail ultérieurement.

De façon similaire, le programme PROG3 définit les modules fonctionnels du dispositif gestionnaire du groupe 3, et plus particulièrement ici :

- un module d'obtention 3A, configuré pour obtenir d'un dispositif utilisateur rejoignant le groupe G-U, une preuve d'une connaissance par ce dispositif utilisateur d'un secret qu'il a choisi pour générer des signatures au nom du groupe G-U ;
- un module de sélection 3B, configuré pour sélectionner un aléa r pour le dispositif utilisateur en question ;
- un module de génération 3C, configuré pour générer un certificat pour ce dispositif utilisateur, comprenant les trois éléments S1, S2, S3 évoqués précédemment et décrits plus en détail ultérieurement ; et
- un module d'envoi 3D, configuré pour envoyer le certificat généré au dispositif utilisateur concerné.

Le programme PROG4 définit les modules fonctionnels du dispositif de vérification 4, et plus particulièrement ici :

- un module d'obtention 4A, configuré pour obtenir une clé publique du groupe G-U pour réaliser la vérification de signatures générées au nom de ce groupe ;
- un module de vérification 4B, configuré pour vérifier si une égalité particulière requérant le calcul d'un couplage bilinéaire et détaillée ultérieurement est vérifiée, lorsque cette égalité est appliquée aux éléments d'une signature de groupe qu'il reçoit pour vérification ; et
- un module de validation 4C de la signature de groupe qu'il a reçue pour vérification, activé si ladite égalité est vérifiée.

Enfin, le programme PROG 5 définit les modules fonctionnels de l'autorité d'ouverture 5, et plus particulièrement ici :

- un premier module de réception 5A, apte à recevoir en provenance de chaque dispositif utilisateur 2-n ayant enrôlé le groupe G-U, d'un élément particulier dépendant du secret u(n) choisi par ce dispositif utilisateur pour générer des signatures au nom du groupe G-U ;
- un deuxième module de réception 5B, apte à recevoir une signature de groupe à ouvrir ;
- un module d'ouverture 5C de la signature de groupe reçue par le module 5B, configuré pour identifier comme dispositif utilisateur originaire de la signature de groupe, le (seul) dispositif utilisateur du groupe de dispositifs utilisateurs pour lequel deux termes évalués à partir du couplage bilinéaire e, des éléments de la signature reçue, et des éléments reçus par le premier module de réception 5A sont égaux.

Dans un autre mode de réalisation, tout ou partie des dispositifs utilisateurs 2-n, n=1,...,N intègrent une puce en silicium et des moyens de communication avec les autres dispositifs du système de communication 1 notamment. La puce en silicium comprend des transistors adaptés pour constituer des portes logiques d'une logique câblée non programmable pour l'exécution des étapes du procédé cryptographique de signature selon l'invention.

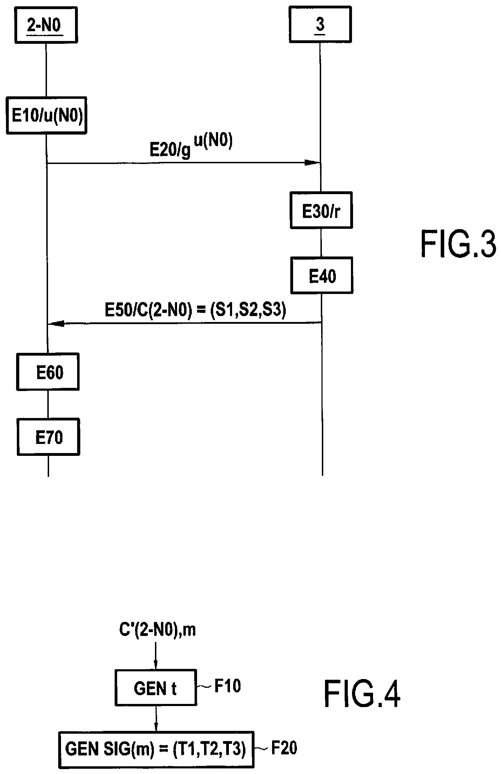

Nous allons maintenant décrire, en référence aux figures 3 à 6, les principales étapes des procédés cryptographiques objets de l'invention (procédé de fourniture d'un certificat, procédé de signature, procédé de vérification d'une signature de groupe et procédé d'ouverture d'une signature de groupe), dans un mode particulier de réalisation.

Comme tous les mécanismes existants de signature de groupe, l'invention s'appuie sur des opérations réalisées dans un environnement bilinéaire comprenant trois groupes cycliques G1, G2 et GT d'ordre p, où p désigne un entier premier, ainsi qu'un couplage bilinéaire e prenant en entrée un élément de G1 et un élément de G2 et à valeurs dans GT. Un tel environnement bilinéaire est classiquement utilisé en cryptographie et peut être implémenté très facilement. Il n'est pas détaillé davantage ici. Un exemple d'un tel environnement bilinéaire pouvant être utilisé dans le cadre de l'invention, et notamment d'un couplage bilinéaire e, est décrit par exemple dans le document de F. Vercauteren intitulé « Optimal Pairings », IEEE Transactions on Information Theory, vol. 56, n°1, janvier 2010, ou dans le livre de J. Silverman intitulé « The Arithmetic of Elliptic Curves », au chapitre XI.

Dans la suite de la description, on désigne par scalaire, un entier du groupe $Z_p$ des entiers relatifs modulo p.

Les procédés objets de l'invention s'appuient tous sur la clé publique du groupe pkG-U, et pour le procédé de fourniture d'un certificat, sur la clé secrète sk3 du dispositif gestionnaire du groupe 3. Ces clés cryptographiques sont déterminées à partir d'aléas (scalaires) secrets x, y et z, qui peuvent être générés (ainsi que les clés) de façon connue en soi par une autorité de confiance, ou de manière coopérative entre plusieurs entités.

Plus particulièrement, conformément à l'invention, la clé publique pkG-U est formée d'une pluralité d'éléments comprenant :

- un élément g et un élément $Z=g^z$ de G1 ; et
- un élément h, un élément $X=h^x$, un élément $Z'=h^{1/z}$ et un élément $Y'=h^{y/z}$ de G2.

Cette clé est partagée par l'ensemble des dispositifs utilisateurs 2-n, n=1,...,N du groupe G-U. Elle est par ailleurs publique donc accessible par des tiers.

La clé secrète sk3 du dispositif gestionnaire 3 du groupe G-U est formée des aléas secrets x et y ou, dans une variante de réalisation, des éléments $g^x$ et $g^y$. Cette clé n'est connue que du dispositif gestionnaire 3 du groupe (et de l'autorité de confiance qui l'a le cas échéant générée).

Nous allons maintenant décrire, en référence à la **figure 3,** les principales étapes d'un procédé cryptographique de fourniture d'un certificat conforme à l'invention, dans un mode particulier de réalisation dans lequel il est mis en oeuvre par le dispositif 3 gestionnaire du groupe G-U pour fournir un certificat à un dispositif utilisateur 2-N0 rejoignant le groupe G-U.

On suppose ici que la clé secrète sk3 du dispositif gestionnaire 3 du groupe G-U est constituée des secrets x et y.

Le dispositif utilisateur 2-N0 souhaitant rejoindre le groupe G-U choisit, via son module de sélection 2A, un scalaire secret u(N0) (étape E10). Le secret u(N0) est par exemple un scalaire généré de façon aléatoire par le dispositif utilisateur 2-N0. Il le mémorise comme sa clé secrète, par exemple dans sa mémoire non volatile.

Dans le mode de réalisation décrit ici, le dispositif utilisateur 2-N0 calcule ensuite puis envoie l'élément $h^{u(N0)}$ à l'autorité d'ouverture 5 (étape non représentée sur la figure 3).

Le dispositif utilisateur 2-N0 calcule également l'élément $g^{u(N0)}$ puis l'envoie, par le biais de son module de preuve 2B, au dispositif gestionnaire 3 du groupe afin de prouver sa connaissance du secret u(N0) (étape E20). Cette preuve de connaissance est par exemple apportée au dispositif gestionnaire 3 du groupe en mettant en oeuvre un algorithme de Schnorr, connu de l'homme du métier. Cet algorithme est décrit par exemple dans le document de C.P.Schnorr intitulé « Efficient Identification and signatures for smart cards », Advances in Cryptology, CRYPTO'89, LNCS 435, pp 239-252, 1990.

Si la preuve de connaissance du secret u(N0) est validement apportée au dispositif gestionnaire 3 du groupe G-U (et plus particulièrement à son module d'obtention 3A) par le dispositif utilisateur 2-N0, le dispositif gestionnaire 3 du groupe, via son module de sélection 3B, sélectionne un aléa scalaire r(N0) pour le dispositif utilisateur 2-N0 (étape E30).

Puis il génère, via son module de génération 3C, à partir de la clé publique pkG-U du groupe G-U, de sa clé secrète sk3=(x,y) et de l'aléa r, un certificat C(2-N0) pour le dispositif utilisateur 2-N0 (étape E40). Ce certificat comporte trois éléments, à savoir :

- un élément $S1=g^r$ appartenant au groupe G1 ;
- un élément $S2=g^{r(x+y.u)}$ appartenant au groupe G2 ; et
- un élément $S3=g^{z.r}$ appartenant au groupe GT.

Le dispositif gestionnaire 3 du groupe envoie le certificat C(2-N0) ainsi généré au dispositif utilisateur 2-N0 via son module d'envoi 3D (étape E50).

Le dispositif utilisateur 2-N0 reçoit, via son module de réception 2C, le certificat C(2-N0) généré par le dispositif gestionnaire 3 du groupe et le stocke, par exemple dans sa mémoire non volatile (étape E60). Le dispositif utilisateur 2-N0 est alors en mesure, à l'issue de l'étape E60, de signer des messages au nom du groupe en utilisant le certificat fourni par le dispositif gestionnaire 3 du groupe G-U.

Conformément à l'invention, le dispositif utilisateur 2-N0 n'utilise pas directement le certificat C(2-N0) fourni par le dispositif gestionnaire 3 du groupe pour générer ses signatures au nom du groupe G-U, mais un certificat C'(2-N0) dérivé du certificat C(2-N0). Ce certificat dérivé du certificat C(2-N0) permet avantageusement de générer une signature de groupe ne contenant pas de preuve de connaissance non interactive.

Plus spécifiquement, le certificat C'(2-N0) utilisé par le dispositif utilisateur 2-N0 pour générer ses signatures au nom du groupe G-U comprend les éléments S1 et S2 du certificat C(2-N0), ainsi qu'un élément S3' correspondant à l'élément S3 du certificat C(2-N0) élevé à la puissance u(N0), où u(N0) désigne la clé secrète du dispositif utilisateur 2-N0 générée à l'étape E10, soit :

$$S3'=S3^{u(N0)}$$

$$C'(2\text{-}N0)=(S1,S2,S3')$$

Le certificat C'(2-N0) peut être généré par le dispositif utilisateur 2-N0 dès la réception du certificat C(2-N0), c'est-à-dire avant de procéder à toute signature au nom du groupe G-U (étape E70). Ceci permet de le générer une unique fois pour l'ensemble des signatures qui seront générées par le dispositif utilisateur 2-N0 au nom du groupe G-U. Il est stocké par le dispositif utilisateur 2-N0, par exemple dans sa mémoire non volatile.

Dans une variante de réalisation, comme mentionné précédemment, la clé secrète sk3 du dispositif gestionnaire 3 du groupe G-U est composée des éléments $g^x$ et $g^y$. Cette variante diffère du mode de réalisation précédemment décrit et représenté à la figure 3 en ce qu'elle comprend en remplacement de l'étape E20, une étape E20' de réception par le dispositif utilisateur 2-N0, en provenance du dispositif gestionnaire 3 du groupe, de l'élément $g^y$, et une étape E20" de calcul et d'envoi par le dispositif utilisateur 2-N0 au dispositif gestionnaire 3 du groupe, de l'élément $(g^y)^{u(N0)}$ pour prouver sa connaissance du secret u(N0) à partir de l'algorithme de Schnorr. Les autres étapes E10, E30-E70 restent inchangées.

Nous allons maintenant décrire comment le certificat modifié C'(2-N0) généré à l'étape E70 par le dispositif utilisateur 2-N0 est utilisé par celui-ci pour générer une signature SIG(m) au nom du groupe G-U pour un message m. Les étapes du procédé de signature selon l'invention mises en oeuvre à cet effet par le dispositif utilisateur 2-N0 sont illustrées à la **figure 4.** Elles font suite, dans le mode de réalisation décrit ici, aux étapes E60 et E70 décrites précédemment en référence à la figure 3.

On suppose ici que le message m que le dispositif utilisateur 2-N0 doit signer est représenté par un nombre entier.

Le dispositif utilisateur 2-N0 génère, via son module de génération 2D, un aléa scalaire notée t pour signer le message m (étape F10).

Puis il calcule, à partir des éléments S1, S2 et S3' du certificat C'(2-N0), les éléments T1 (appartenant au groupe G1), T2 (appartenant au groupe G2) et T3 (appartenant au groupe GT) suivants (étape F20) :

$$T1=S1^{t}$$

$$T2= (S2.S1^{u(N0).m})^{t}$$

$$T3=(S3')^{t}=S3^{u.t}$$

La signature SIG(m) du message m générée par le dispositif utilisateur 2-N0 au nom du groupe G-U est alors formée des trois éléments T1, T2 et T3 ainsi calculés par le module 2D.

Cette signature SIG(m) est émise par le dispositif utilisateur 2-N0 en accompagnement du message m à destination d'un dispositif ou d'une entité auquel ou à laquelle le message m est destiné pour prouver à ce dispositif ou cette entité que c'est bien le dispositif utilisateur 2-N0 qui est à l'origine du message m.

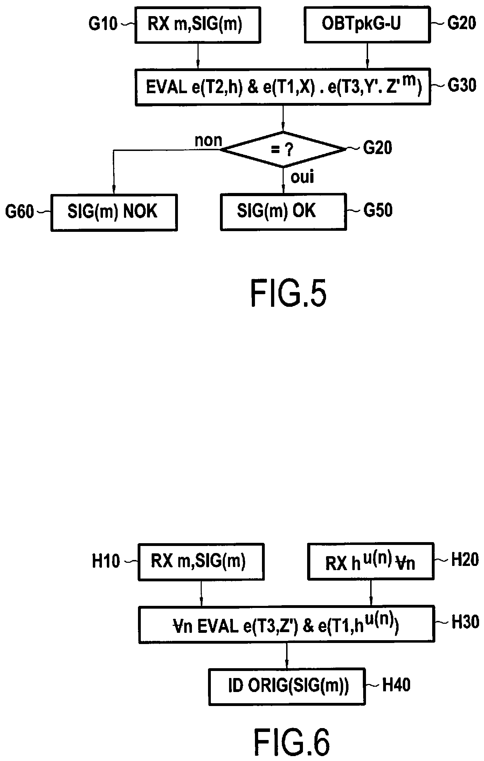

Nous allons maintenant décrire en référence à la **figure 5,** les principales étapes mises en oeuvre pour vérifier qu'une signature de groupe ainsi générée et accompagnant un message m est bien valide. Ces étapes sont mises en oeuvres, dans le mode de réalisation décrit ici, par le dispositif de vérification 4.

On suppose ici que le dispositif de vérification 4 reçoit un message m et une signature SIG(m) accompagnant ce message, générée conformément à l'invention (étape G10). La signature SIG(m) comprend les trois éléments T1, T2 et T3 calculés à l'étape F20 précédemment décrite en référence à la figure 4.

On suppose par ailleurs ici que le dispositif de vérification 4 connait la clé publique pkG-U du groupe G-U (étape G20). Cette clé étant publique, aucune limitation n'est attachée à la façon dont le dispositif de vérification 4 l'a obtenue via son module d'obtention 4A (par exemple en consultant l'autorité de confiance l'ayant générée ou du dispositif gestionnaire 3 du groupe G-U).

Pour vérifier la signature SIG(m) et s'assurer qu'elle a bien été générée par un membre du groupe G-U, le dispositif de vérification 4 calcule ici, par l'intermédiaire de son module de vérification 4B et en utilisant la clé publique pkG-U, le terme e(T2,h), où e désigne le couplage bilinéaire de l'environnement bilinéaire considéré pour mettre en oeuvre l'invention et introduit précédemment.

Le module de vérification 4B calcule également le terme :

$$e(T1,X).e(T3,Y'.Z'^{m})$$

Puis il compare les deux termes qu'il vient de calculer (étape test G40).

Si l'égalité entre les deux termes est vérifiée (réponse oui à l'étape test G40), cela signifie que la signature est valide, et le module 4C du dispositif de vérification valide la signature SIG(m) (étape G50).

Sinon (réponse non à l'étape test G40), la signature est invalidée et rejetée par le module 4C (étape G60).

On note que la vérification de la signature SIG(m) est opérée par le dispositif de vérification 4 sans connaissance du dispositif utilisateur à l'origine de cette signature. Cette vérification permet uniquement de déterminer que la signature en question a bien été générée par un membre du groupe G-U.

Nous allons maintenant décrire en référence à la **figure 6,** les principales étapes mises en oeuvre pour ouvrir une signature de groupe SIG(m) générée pour un message m au moyen du procédé de signature selon l'invention. Ces étapes sont mises en oeuvres, dans le mode de réalisation décrit ici, par l'autorité d'ouverture 5.

On suppose ici que l'autorité d'ouverture 5 reçoit donc, via son deuxième module de réception 5B, une signature SIG(m) à ouvrir générée par exemple par le dispositif utilisateur 2-N0 conformément à l'invention (étape H10). La signature SIG(m) comprend les trois éléments T1, T2 et T3 calculés à l'étape F20 précédemment décrite en référence à la figure 4.

On suppose par souci de simplification ici que le dispositif utilisateur 2-N0 est l'un des dispositifs utilisateurs 2-n, n=1,...,N du groupe G-U.

Conformément à ce qui a été décrit en référence à la figure 3, chaque dispositif utilisateur 2-n du groupe G-U a, lorsqu'il a rejoint le groupe G-U, transmis à l'autorité d'ouverture 5 l'élément $h^{u(n)}$ calculé à partir de l'élément h de la clé publique pkG-U du groupe et de sa clé secrète u(n) (cf. étape E10 illustrée à la figure 3). Ces éléments ont été reçus successivement par le premier module 5A de réception de l'autorité d'ouverture 5 et stockés par exemple dans sa mémoire non volatile 5 en association avec les identifiants des dispositifs utilisateurs les ayant générés (étape H20).

Suite à la réception de la signature SIG(m) à ouvrir, l'autorité d'ouverture 5, via son module d'ouverture 5C, calcule au moyen de la clé publique pkG-U du groupe G-U, pour chaque élément $h^{u(n)}$ reçu d'un dispositif utilisateur 2-n, n=1,...,N du groupe G-U les termes suivants e(T3, Z') et e(T1,$h^{u(n)}$) où e désigne le couplage bilinéaire précédemment introduit et utilisé notamment pour la vérification de la signature (étape H30).

Puis le module d'ouverture 5C identifie l'unique dispositif utilisateur 2-n (en l'occurrence n=N0 ici) pour lequel les deux termes calculés sont égaux (étape H40), et détermine que ce dispositif utilisateur est à l'origine de la signature SIG(m). Cette propriété découle avantageusement des propriétés du couplage bilinéaire e et de la façon dont la signature a été générée.

## Revendications

1. Procédé cryptographique de signature d'un message m, par un dispositif utilisateur (2-N0), au nom d'un groupe (G-U), ledit groupe étant géré par un gestionnaire de groupe (3) ayant une clé secrète générée à partir de deux aléas x et y, ledit groupe ayant une clé publique formée d'une pluralité d'éléments comprenant un élément g et un élément $g^z$ appartenant à un groupe cyclique G1 d'ordre p, p désignant un nombre entier premier et z un aléa, et un élément h, un élément $h^x$, un élément $h^{1/z}$ et un élément $h^{y/z}$ appartenant à un groupe cyclique G2 d'ordre p, ledit procédé cryptographique de signature étant **caractérisé en ce qu'**il comprend :

   - une étape de réception (E50), après avoir prouvé (E20) au gestionnaire du groupe, par un mécanisme de preuve de connaissance interactif, une connaissance d'un secret u choisi par le dispositif utilisateur, d'un certificat C fourni par le gestionnaire du groupe comprenant un élément $S1=g^r$, un élément $S2= g^{r(x+y.u)}$ et un élément $S3=g^{z.r}$ où r désigne un aléa sélectionné par le gestionnaire du groupe pour ledit dispositif utilisateur,
   - une étape de calcul (E70) d'un élément S3' à partir de l'élément S3 du certificat fourni par le gestionnaire du groupe en élevant l'élément S3 à la puissance u ; et
   - une étape de génération (F20) d'une signature de groupe pour le message m, à partir du certificat (S1,S2,S3) fourni par le gestionnaire du groupe, d'un aléa t généré par le dispositif utilisateur (F10), et du secret u, ladite signature de groupe générée comprenant un élément $T1=S1^t$, un élément $T2=(S2.S1^{u.m})^t$ et un élément $T3= S3^{ut}$ calculé en élevant l'élément S3' calculé lors de l'étape de calcul à la puissance t.

2. Procédé cryptographique de signature selon la revendication 1 dans lequel la clé secrète du gestionnaire du groupe est formée des aléas x et y et dans lequel, pour prouver au gestionnaire du groupe la connaissance du secret u, le dispositif utilisateur envoie au gestionnaire du groupe l'élément $g^u$.

3. Procédé cryptographique de signature selon la revendication 1 dans lequel la clé secrète du gestionnaire de groupe est formée des éléments $g^x$ et $g^y$ et dans lequel, pour prouver au gestionnaire du groupe la connaissance du secret u, le dispositif utilisateur :

   - reçoit du gestionnaire du groupe l'élément $g^y$ ; et
   - calcule et envoie au gestionnaire du groupe l'élément $(g^y)^u$.

4. Procédé cryptographique de signature selon l'une quelconque des revendications 1 à 3 dans lequel le dispositif utilisateur prouve au gestionnaire du groupe la connaissance du secret u en utilisant l'algorithme de Schnorr.

5. Procédé cryptographique de fourniture d'un certificat par un gestionnaire (3) d'un groupe à un dispositif utilisateur (2-N0) rejoignant le groupe, ledit gestionnaire de groupe ayant une clé secrète générée à partir de deux aléas x et y, ledit groupe ayant une clé publique formée d'une pluralité d'éléments comprenant un élément g et un élément $g^z$ appartenant à un groupe cyclique G1 d'ordre p, p désignant un nombre entier premier et z un aléa, et un élément h, un élément $h^x$, un élément $h^{1/z}$ et un élément $h^{y/z}$ appartenant à un groupe cyclique G2 d'ordre p, ledit procédé cryptographique de fourniture étant caractérisé en qu'il comprend:

   - une étape d'obtention (E20), en provenance du dispositif utilisateur, et par un mécanisme de preuve de connaissance interactif avec le dispositif utilisateur, d'une preuve d'une connaissance par ledit dispositif utilisateur d'un secret u choisi par le dispositif utilisateur ;
   - une étape de sélection (E30) d'un aléa r pour le dispositif utilisateur ;
   - une étape de génération (E40) d'un certificat (S1, S2, S3) pour le dispositif utilisateur comprenant un élément $S1=g^r$, un élément $S2= g^{r(x+y.u)}$ et un élément $S3=g^{z.r}$ ; et
   - une étape d'envoi (E50) du certificat généré au dispositif utilisateur.

6. Procédé cryptographique de vérification d'une signature de groupe comprenant trois éléments T1, T2 et T3, et générée pour un message m par un dispositif utilisateur appartenant à un groupe de dispositifs utilisateurs en utilisant un procédé cryptographique de signature selon l'une quelconque des revendications 1 à 4, ledit groupe ayant une clé publique formée d'une pluralité d'éléments comprenant un élément g et un élément $g^z$ appartenant à un groupe cyclique G1 d'ordre p, p désignant un nombre entier premier et z un aléa, et un élément h, un élément $X=h^x$, un élément $Z'=h^{1/z}$ et un élément $Y'=h^{y/z}$

appartenant à un groupe cyclique G2 d'ordre p, x et y désignant des aléas utilisés pour générer une clé privée d'un gestionnaire du groupe, ledit procédé de vérification comprenant :

- une étape de vérification (G30) de l'égalité $e(T2,h)=e(T1,X).e(T3,Y'.Z'^m)$, où e désigne un couplage bilinéaire défini sur les groupes cycliques G1 et G2 et à valeurs dans le groupe cyclique GT ; et
- si ladite égalité est vérifiée, une étape de validation (G50) de la signature de groupe.

7. Procédé cryptographique d'ouverture d'une signature de groupe, comprenant trois éléments T1, T2 et T3, et générée pour un message m par un dispositif utilisateur dit originaire appartenant à un groupe de dispositifs utilisateurs en utilisant un procédé cryptographique de signature selon l'une quelconque des revendications 1 à 4, ledit groupe ayant une clé publique formée d'une pluralité d'éléments comprenant un élément g et un élément $g^z$ appartenant à un groupe cyclique G1 d'ordre p, p désignant un nombre entier premier et z un aléa, et un élément h, un élément $X=h^x$, un élément $Z'=h^{1/z}$ et un élément $Y'=h^{y/z}$ appartenant à un groupe cyclique G2 d'ordre p, x et y désignant des aléas utilisés pour générer une clé privée d'un gestionnaire du groupe, ledit procédé d'ouverture comprenant :

- une étape de réception (H20), en provenance de chaque dispositif utilisateur du groupe de dispositifs utilisateurs, d'un élément $h^u$, où u désigne le secret choisi par ce dispositif utilisateur pour générer des signatures au nom du groupe en utilisant le procédé cryptographique de signature selon l'une quelconque des revendications 1 à 5 ;
- une étape d'ouverture (H30-H40) de la signature de groupe comprenant l'identification du dispositif utilisateur du groupe de dispositifs utilisateurs pour lequel le terme $e(T3,Z')$ et le terme $e(T1,h^u)$ sont égaux, où e désigne un couplage bilinéaire défini sur les groupes cycliques G1 et G2 et à valeurs dans le groupe cyclique GT, et $h^u$ désigne l'élément reçu en provenance de ce dispositif utilisateur ;

le dispositif utilisateur originaire de la signature de groupe correspondant au dispositif utilisateur identifié lors de l'étape d'ouverture.

8. Programme d'ordinateur (PROG) comportant des instructions pour l'exécution des étapes du procédé cryptographique de signature selon l'une quelconque des revendications 1 à 4, ou du procédé cryptographique de fourniture d'un certificat selon la revendication 6, ou du procédé cryptographique de vérification d'une signature selon la revendication 7 ou du procédé d'ouverture d'une signature selon la revendication 8 lorsque ledit programme est exécuté par un ordinateur.

9. Support d'enregistrement lisible par un ordinateur sur lequel est enregistré un programme d'ordinateur selon la revendication 8.

10. Dispositif utilisateur (2-N0) apte à signer un message m au nom d'un groupe, ledit groupe étant géré par un gestionnaire de groupe ayant une clé secrète générée à partir de deux aléas x et y, ledit groupe ayant une clé publique formée d'une pluralité d'éléments comprenant un élément g et un élément $g^z$ appartenant à un groupe cyclique G1 d'ordre p, p désignant un nombre entier premier et z un aléa, et un élément h, un élément $h^x$, un élément $h^{1/z}$ et un élément $h^{y/z}$ appartenant à un groupe cyclique G2 d'ordre p, ledit dispositif utilisateur comprenant :

- un module de sélection (2A), configuré pour choisir un secret u ;
- un module de preuve (2B), configuré pour prouver au gestionnaire du groupe une connaissance du secret u ; ledit dispositif utilisateur étant **caractérisé en ce qu'**il comprend en outre :

- un module de réception (2C), apte à recevoir après que le module de preuve a prouvé au gestionnaire du groupe, par un mécanisme de preuve de connaissance interactif, une connaissance du secret u, un certificat C fourni par le gestionnaire du groupe comprenant un élément $S1=g^r$, un élément $S2=g^{r(x+y.u)}$ et un élément $S3=g^{z.r}$ où r désigne un aléa sélectionné par le gestionnaire du groupe pour ledit dispositif utilisateur ; et
- un module de génération (2D), configuré pour générer une signature de groupe pour le message m, à partir du certificat (S1,S2,S3) fourni par le gestionnaire du groupe, d'un aléa t généré par le dispositif utilisateur, et du secret u, ladite signature de groupe générée comprenant un élément $T1=S1^t$, un élément $T2=(S2.S1^{u.m})^t$ et un élément $T3=S3^{ut}$, ledit dispositif utilisateur étant configuré pour calculer un élément S3' à partir de l'élément S3 du certificat fourni par le gestionnaire du groupe en élevant l'élément S3 à la puissance u, ledit élément T3 étant calculé par le module de génération de la signature en élevant l'élément S3' calculé lors de l'étape de calcul à la puissance t.

11. Dispositif gestionnaire (3) d'un groupe de dispositifs utilisateurs, ledit dispositif gestionnaire de groupe ayant une clé secrète générée à partir de deux aléas x et y, ledit groupe ayant une clé publique formée d'une pluralité d'éléments comprenant un élément g et un élément $g^z$ appartenant à un groupe cyclique G1 d'ordre p, p désignant un nombre entier premier et z un aléa, et un élément h, un élément $h^x$, un élément $h^{1/z}$ et un élément $h^{y/z}$ appartenant à un groupe cyclique G2 d'ordre p, ledit dispositif gestionnaire étant **caractérisé en ce qu'**il comprend :

- un module d'obtention (3A), configuré pour obtenir d'un dispositif utilisateur rejoignant ledit groupe, et par un mécanisme de preuve de connaissance interactif avec le dispositif utilisateur, une preuve d'une connaissance par ledit dispositif utilisateur d'un secret u choisi par le dispositif utilisateur ;
- un module de sélection (3B), configuré pour sélectionner un aléa r pour le dispositif utilisateur ;
- un module de génération (3C), configuré pour générer un certificat pour le dispositif utilisateur comprenant un élément $S1=g^r$, un élément $S2=g^{r(x+y.u)}$ et un élément $S3=g^{z.r}$ ; et
- un module d'envoi (3D), configuré pour envoyer le certificat généré au dispositif utilisateur.

12. Dispositif de vérification (4), configuré pour vérifier une signature de groupe comprenant trois éléments T1, T2 et T3, et générée pour un message m par un dispositif utilisateur selon la revendication 10 appartenant à un groupe de dispositifs utilisateurs, ledit groupe ayant une clé publique formée d'une pluralité d'éléments comprenant un élément g et un élément $g^z$ appartenant à un groupe cyclique G1 d'ordre p, p désignant un nombre entier premier et z un aléa, et un élément h, un élément $X=h^x$, un élément $Z'=h^{1/z}$ et un élément $Y'=h^{y/z}$ appartenant à un groupe cyclique G2 d'ordre p, x et y désignant des aléas utilisés pour générer une clé privée d'un gestionnaire du groupe selon la revendication 12, ledit dispositif de vérification comprenant :

- un module de vérification (4B), configuré pour vérifier l'égalité $e(T2,h)=e(T1,X).e(T3,Y'.Z'^m)$, où e désigne un couplage bilinéaire défini sur les groupes cycliques G1 et G2 et à valeurs dans le groupe cyclique GT ; et
- un module de validation (4C) de la signature de groupe activé si ladite égalité est vérifiée.

13. Dispositif d'ouverture (5) configuré pour ouvrir une signature de groupe comprenant trois éléments T1, T2 et T3, et générée pour un message m par un dispositif utilisateur dit originaire appartenant à un groupe de dispositifs utilisateurs selon la revendication 10, ledit groupe ayant une clé publique formée d'une pluralité d'éléments comprenant un élément g et un élément $g^z$ appartenant à un groupe cyclique G1 d'ordre p, p désignant un nombre entier premier et z un aléa, et un élément h, un élément $X=h^x$, un élément $Z'=h^{1/z}$ et un élément $Y'=h^{y/z}$ appartenant à un groupe cyclique G2 d'ordre p, x et y désignant des aléas utilisés pour générer une clé privée d'un gestionnaire du groupe selon la revendication 12, ledit dispositif d'ouverture comprenant :

- un module de réception (5A), apte à recevoir en provenance de chaque dispositif utilisateur du groupe de dispositifs utilisateurs, un élément $h^u$, où u désigne le secret choisi par ce dispositif utilisateur pour générer des signatures au nom du groupe ;
- un module d'ouverture (5C) de la signature de groupe, configuré pour identifier comme dispositif utilisateur originaire de la signature de groupe, le dispositif utilisateur du groupe de dispositifs utilisateurs pour lequel le terme $e(T3,Z')$ et le terme $e(T1,h^u)$ sont égaux, où e désigne un couplage bilinéaire défini sur les groupes cycliques G1 et G2 et à valeurs dans le groupe cyclique GT, et $h^u$ désigne l'élément reçu en provenance de ce dispositif utilisateur.

14. Système de communication (1) comprenant :

- un groupe de dispositifs utilisateurs (2-1,...2-N) conformes à la revendication 10 ; et
- un dispositif gestionnaire (3) du groupe conforme à la revendication 11.

15. Système de communication (1) selon la revendication 14 comprenant en outre :

- un dispositif de vérification (4) selon la revendication 12 ; et/ou
- un dispositif d'ouverture (5) selon la revendication 13.

## Patentansprüche

1. Kryptografisches Verfahren zur Signatur einer Nachricht m, durch eine Benutzervorrichtung(2-N0), im Namen einer Gruppe (G-U), wobei die Gruppe von einem Gruppenverwalter (3) verwaltet wird, der einen geheimen Schlüssel hat, der ausgehend von zwei Zufallszahlen x und y erzeugt wird, wobei die Gruppe einen öffentlichen Schlüssel hat, der aus einer Mehrzahl von Elementen gebildet wird, umfassend ein Element g und ein Element $g^z$, die einer zyklischen Gruppe G1 der Ordnung p angehören, wobei p eine ganze Primzahl und z eine Zufallszahl bezeichnet, und ein Element h, ein Element $h^x$, ein Element $h^{1/z}$ und ein Element $h^{y/z}$, die einer zyklischen Gruppe G2 der Ordnung p angehören, wobei das kryptografische Verfahren zur Signatur **dadurch gekennzeichnet ist, dass** es umfasst:

- einen Schritt des Empfangens (E50), nachdem dem Gruppenverwalter, durch einen interaktiven Kenntnisnachweismechanismus, eine Kenntnis eines von der Benutzervorrichtung gewählten Geheimnisses u nachgewiesen wurde (E20), eines von dem Gruppenverwalter bereitgestellten Zertifikats C, das ein Element $S1=g^r$, ein Element $S2= g^{r(x+y.u)}$ und ein Element $S3=g^{z.r}$ umfasst, worin r eine von dem Gruppenverwalter für die Benutzervorrichtung ausgewählte Zufallszahl bezeichnet,

- einen Schritt des Berechnens (E70) eines Elements S3' ausgehend von dem Element S3 des von dem Gruppenverwalter bereitgestellten Zertifikats, indem das Element S3 in die Potenz u erhoben wird, wobei das Element T3 bei dem Schritt des Erzeugens der Signatur berechnet wird, indem das bei dem Schritt des Berechnens berechnete Element S3' in die Potenz t erhoben wird; und

- einen Schritt des Erzeugens (F20) einer Gruppensignatur für die Nachricht m ausgehend von dem von dem Gruppenverwalter bereitgestellten Zertifikat (S1,S2,S3), einer von der Benutzervorrichtung (F10) erzeugten Zufallszahl t und dem Geheimnis u, wobei die erzeugte Gruppensignatur ein Element $T1=S1^t$, ein Element $T2=(S2.S1^{u.m})^t$ und ein Element $T3= S3^{ut}$ umfasst.

2. Kryptografisches Verfahren zur Signatur nach Anspruch 1, wobei der geheime Schlüssel des Gruppenverwalters aus den Zufallszahlen x und y gebildet wird und wobei, um dem Gruppenverwalter die Kenntnis des Geheimnisses u nachzuweisen, die Benutzervorrichtung an den Gruppenverwalter das Element $g^u$ sendet.

3. Kryptografisches Verfahren zur Signatur nach Anspruch 1, wobei der geheime Schlüssel des Gruppenverwalters aus den Elementen $g^x$ und $g^y$ gebildet wird und wobei, um dem Gruppenverwalter die Kenntnis des Geheimnisses u nachzuweisen, die Benutzervorrichtung: - von dem Gruppenverwalter das Element $g^y$ empfängt; und

- das Element $(g^y)^u$ berechnet und an den Gruppenverwalter sendet.

4. Kryptografisches Verfahren zur Signatur nach einem der Ansprüche 1 bis 3, wobei die Benutzervorrichtung dem Gruppenverwalter die Kenntnis des Geheimnisses u nachweist, indem sie den Schnorr-Algorithmus verwendet.

5. Kryptografisches Verfahren zum Bereitstellen eines Zertifikats durch einen Verwalter (3) einer Gruppe für eine der Gruppe beitretende Benutzervorrichtung (2-N0), wobei der Gruppenverwalter einen geheimen Schlüssel hat, der ausgehend von zwei Zufallszahlen x und y erzeugt wird, wobei die Gruppe einen öffentlichen Schlüssel hat, der aus einer Mehrzahl von Elementen gebildet wird, umfassend ein Element g und ein Element $g^z$, die einer zyklischen Gruppe G1 der Ordnung p angehören, wobei p eine ganze Primzahl und z eine Zufallszahl bezeichnet, und ein Element h, ein Element $h^x$, ein Element $h^{1/z}$ und ein Element $h^{y/z}$, die einer zyklischen Gruppe G2 der Ordnung p angehören, wobei das kryptografische Verfahren zum Bereitstellen **dadurch gekennzeichnet ist, dass** es umfasst:

- einen Schritt des Erhaltens (E20), von der Benutzervorrichtung und durch einen mit der Benutzervorrichtung interaktiven Kenntnisnachweismechanismus, eines Nachweises für eine Kenntnis, durch die Benutzervorrichtung, eines von der Benutzervorrichtung gewählten Geheimnisses u;

- einen Schritt des Auswählens (E30) einer Zufallszahl r für die Benutzervorrichtung;

- einen Schritt des Erzeugens (E40) eines Zertifikats (S1, S2, S3) für die Benutzervorrichtung, das ein Element $S1=g^r$, ein Element $S2= g^{r(x+y.u)}$ und ein Element $S3=g^{z.r}$ umfasst; und

- einen Schritt des Sendens (E50) des erzeugten Zertifikats an die Benutzervorrichtung.

6. Kryptografisches Verfahren zum Verifizieren einer Gruppensignatur, die drei Elemente T1, T2 und T3 umfasst und für eine Nachricht m durch eine Benutzervorrichtung erzeugt wird, die einer Gruppe von Benutzervorrichtungen angehört, indem ein kryptografisches Verfahren zur Signatur nach einem der Ansprüche 1 bis 4 verwendet wird, wobei die Gruppe einen öffentlichen Schlüssel hat, der aus einer Mehrzahl von Elementen gebildet wird, umfassend ein Element g und ein Element $g^z$, die einer zyklischen Gruppe G1 der Ordnung p angehören, wobei p eine ganze Primzahl und z eine Zufallszahl bezeichnet, und ein Element h, ein Element $X=h^x$, ein Element $Z'=h^{1/Z}$ und ein Element $Y'=h^{y/Z}$, die einer zyklischen Gruppe G2 der Ordnung p angehören, wobei x und y Zufallszahlen bezeichnen, die verwendet werden, um einen privaten Schlüssel eines Gruppenverwalters zu erzeugen, wobei das Verfahren zum Verifizieren umfasst:

- einen Schritt des Verifizierens (G30) der Gleichheit $e(T2,h)=e(T1,X) .e(T3,Y'.Z'^m)$, worin e eine bilineare Paarung bezeichnet, die über die zyklischen Gruppen G1 und G2 definiert ist und Werte in der zyklischen Gruppe GT hat; und

- wenn die Gleichheit verifiziert ist, einen Schritt des Validierens (G50) der Gruppensignatur.

7. Kryptografisches Verfahren zum Öffnen einer Gruppensignatur, die drei Elemente T1, T2 und T3 umfasst und für eine Nachricht m durch eine sogenannte Ursprungsbenutzervorrichtung erzeugt wird, die einer Gruppe von Benutzervorrichtungen angehört, indem ein kryptografisches Verfahren zur Signatur nach einem der Ansprüche 1 bis 4 verwendet wird, wobei die Gruppe einen öffentlichen Schlüssel hat, der aus einer Mehrzahl von Elementen gebildet wird, umfassend ein Element g und ein Element $g^z$, die einer zyklischen Gruppe G1 der Ordnung p angehören, wobei p eine ganze Primzahl und z eine Zufallszahl bezeichnet, und ein Element h, ein Element $X=h^x$, ein Element $Z'=h^{1/z}$ und ein Element $Y'=h^{y/z}$, die einer zyklischen Gruppe G2 der Ordnung p angehören, wobei x und y Zufallszahlen bezeichnen, die verwendet werden, um einen privaten Schlüssel eines Gruppenverwalters zu erzeugen, wobei das Verfahren zum Öffnen umfasst:

   - einen Schritt des Empfangens (H20), von jeder Benutzervorrichtung der Gruppe von Benutzervorrichtungen, eines Elements $h^u$, worin u das Geheimnis bezeichnet, das von dieser Benutzervorrichtung gewählt wird, um Signaturen im Namen der Gruppe zu erzeugen, indem das kryptografische Verfahrens zur Signatur nach einem der Ansprüche 1 bis 5 verwendet wird;
   - einen Schritt des Öffnens (H30-H40) der Gruppensignatur, umfassend die Identifizierung der Benutzervorrichtung der Gruppe von Benutzervorrichtungen, für welche der Term $e(T3,Z')$ und der Term $e(T1,h^u)$ gleich sind, worin e eine bilineare Paarung bezeichnet, die über die zyklischen Gruppen G1 und G2 definiert ist und Werte in der zyklischen Gruppe GT hat, und $h^u$ das von dieser Benutzervorrichtung empfangene Element bezeichnet;

   wobei die Ursprungsbenutzervorrichtung der Gruppensignatur der bei dem Schritt des Öffnens identifizierten Benutzervorrichtung entspricht.

8. Computerprogramm (PROG), das Anweisungen umfasst, die bei der Ausführung des Programms durch einen Computer die Schritte des kryptografischen Verfahrens zur Signatur nach einem der Ansprüche 1 bis 4 oder des kryptografischen Verfahrens zum Bereitstellen eines Zertifikats nach Anspruch 6 oder des kryptografischen Verfahrens zum Verifizieren einer Signatur nach Anspruch 7 oder des Verfahrens zum Öffnen der Signatur nach Anspruch 8 ausführen.

9. Computerlesbares Speichermedium, auf dem ein Computerprogramm nach Anspruch 8 gespeichert ist.

10. Benutzervorrichtung(2-N0), die geeignet ist, eine Nachricht m im Namen einer Gruppe zu signieren, wobei die Gruppe von einem Gruppenverwalter verwaltet wird, der einen geheimen Schlüssel hat, der ausgehend von zwei Zufallszahlen x und y erzeugt wird, wobei die Gruppe einen öffentlichen Schlüssel hat, der aus einer Mehrzahl von Elementen gebildet wird, umfassend ein Element g und ein Element $g^z$, die einer zyklischen Gruppe G1 der Ordnung p angehören, wobei p eine ganze Primzahl und z eine Zufallszahl bezeichnet, und ein Element h, ein Element $h^x$, ein Element $h^{1/z}$ und ein Element $h^{y/z}$, die einer zyklischen Gruppe G2 der Ordnung p angehören, wobei die Benutzervorrichtung umfasst:

   - ein Modul zum Auswählen (2A), das dazu ausgestaltet ist, ein Geheimnis u zu wählen;
   - ein Modul zum Nachweisen (2B), das dazu ausgestaltet ist, dem Gruppenverwalter eine Kenntnis des Geheimnisses u nachzuweisen; wobei die Benutzervorrichtung **dadurch gekennzeichnet ist, dass** sie ferner umfasst:

   - ein Modul zum Empfangen (2C), das geeignet ist, nachdem das Modul zum Nachweisen dem Gruppenverwalter, durch einen interaktiven Kenntnisnachweismechanismus, eine Kenntnis des Geheimnisses u nachgewiesen hat, ein von dem Gruppenverwalter bereitgestelltes Zertifikat C zu empfangen, das ein Element $S1=g^r$, ein Element $S2=g^{r(x+y.u)}$ und ein Element $S3=g^{z.r}$ umfasst, worin r eine von dem Gruppenverwalter für die Benutzervorrichtung ausgewählte Zufallszahl bezeichnet; und
   - ein Modul zum Erzeugen (2D), das dazu ausgestaltet ist, eine Gruppensignatur für die Nachricht m ausgehend von dem von dem Gruppenverwalter bereitgestellten Zertifikat (S1,S2,S3), einer von der Benutzervorrichtung erzeugten Zufallszahl t und dem Geheimnis u zu erzeugen, wobei die erzeugte Gruppensignatur ein Element $T1=S1^t$, ein Element $T2=(S2.S1^{u.m})^t$ und ein Element $T3=S3^{ut}$ umfasst, wobei die Benutzervorrichtung dazu ausgestaltet ist, ein Element S3' ausgehend von dem Element S3 des von dem Gruppenverwalter bereitgestellten Zertifikats zu berechnen, indem das Element S3 in die Potenz u erhoben wird, wobei das Element T3 von dem Modul zum Erzeugen der Signatur berechnet wird, indem das bei dem Schritt des Berechnens berechnete Element S3' in die Potenz t erhoben wird.

**11.** Verwaltungsvorrichtung (3) einer Gruppe von Benutzervorrichtungen, wobei die Gruppenverwaltungsvorrichtung einen geheimen Schlüssel hat, der ausgehend von zwei Zufallszahlen x und y erzeugt wird, wobei die Gruppe einen öffentlichen Schlüssel hat, der aus einer Mehrzahl von Elementen gebildet wird, umfassend ein Element g und ein Element $g^z$, die einer zyklischen Gruppe G1 der Ordnung p angehören, wobei p eine ganze Primzahl und z eine Zufallszahl bezeichnet, und ein Element h, ein Element $h^x$, ein Element $h^{1/z}$ und ein Element $h^{y/z}$, die einer zyklischen Gruppe G2 der Ordnung p angehören, wobei die Verwaltungsvorrichtung **dadurch gekennzeichnet ist, dass** sie umfasst:

- ein Modul zum Erhalten (3A), das dazu ausgestaltet ist, von einer der Gruppe beitretenden Benutzervorrichtung und durch einen mit der Benutzervorrichtung interaktiven Kenntnisnachweismechanismus, einen Nachweis für eine Kenntnis, durch die Benutzervorrichtung, eines von der Benutzervorrichtung gewählten Geheimnisses u zu erhalten;
- ein Modul zum Auswählen (3B), das dazu ausgestaltet ist, eine Zufallszahl r für die Benutzervorrichtung auszuwählen;
- ein Modul zum Erzeugen (3C), das dazu ausgestaltet ist, ein Zertifikat für die Benutzervorrichtung zu erzeugen, das ein Element $S1=g^r$, ein Element $S2= g^{r(x+y.u)}$ und ein Element $S3=g^{z.r}$ umfasst; und
- ein Modul zum Senden (3D), das dazu ausgestaltet ist, das erzeugte Zertifikat an die Benutzervorrichtung zu senden.

**12.** Verifizierungsvorrichtung (4), die dazu ausgestaltet ist, eine Gruppensignatur zu verifizieren, die drei Elemente T1, T2 und T3 umfasst und für eine Nachricht m durch eine Benutzervorrichtung nach Anspruch 10 erzeugt wird, die einer Gruppe von Benutzervorrichtungen angehört, wobei die Gruppe einen öffentlichen Schlüssel hat, der aus einer Mehrzahl von Elementen gebildet wird, umfassend ein Element g und ein Element $g^z$, die einer zyklischen Gruppe G1 der Ordnung p angehören, wobei p eine ganze Primzahl und z eine Zufallszahl bezeichnet, und ein Element h, ein Element $X=h^x$, ein Element $Z'=h^{1/z}$ und ein Element $Y'=h^{y/z}$, die einer zyklischen Gruppe G2 der Ordnung p angehören, wobei x und y Zufallszahlen bezeichnen, die verwendet werden, um einen privaten Schlüssel eines Gruppenverwalters nach Anspruch 12 zu erzeugen, wobei die Verifizierungsvorrichtung umfasst:

- ein Modul zum Verifizieren (4B), das dazu ausgestaltet ist, die Gleichheit $e(T2,h)=e(T1,X).e(T3,Y'.Z'^m)$ zu verifizieren, worin e eine bilineare Paarung bezeichnet, die über die zyklischen Gruppen G1 und G2 definiert ist und Werte in der zyklischen Gruppe GT hat; und
- ein Modul zum Validieren (4C) der aktivierten Gruppensignatur, wenn die Gleichheit verifiziert ist.

**13.** Öffnungsvorrichtung (5), die dazu ausgestaltet ist, eine Gruppensignatur zu öffnen, die drei Elemente T1, T2 und T3 umfasst und für eine Nachricht m durch eine sogenannte Ursprungsbenutzervorrichtung erzeugt wird, die einer Gruppe von Benutzervorrichtungen nach Anspruch 10 angehört, wobei die Gruppe einen öffentlichen Schlüssel hat, der aus einer Mehrzahl von Elementen gebildet wird, umfassend ein Element g und ein Element $g^z$, die einer zyklischen Gruppe G1 der Ordnung p angehören, wobei p eine ganze Primzahl und z eine Zufallszahl bezeichnet, und ein Element h, ein Element $X=h^x$, ein Element $Z'=h^{1/z}$ und ein Element $Y'=h^{y/z}$, die einer zyklischen Gruppe G2 der Ordnung p angehören, wobei x und y Zufallszahlen bezeichnen, die verwendet werden, um einen privaten Schlüssel eines Gruppenverwalters nach Anspruch 12 zu erzeugen, wobei die Öffnungsvorrichtung umfasst:

- ein Modul zum Empfangen (5A), das geeignet ist, von jeder Benutzervorrichtung der Gruppe von Benutzervorrichtungen ein Element $h^u$ zu empfangen, worin u das Geheimnis bezeichnet, das von dieser Benutzervorrichtung verwendet wird, um Signaturen im Namen der Gruppe zu erzeugen;
- ein Modul zum Öffnen (5C) der Gruppensignatur, das dazu ausgestaltet ist, als Ursprungsbenutzervorrichtung der Gruppensignatur die Benutzervorrichtung der Gruppe von Benutzervorrichtungen zu identifizieren, für welche der Term $e(T3,Z')$ und der Term $e(T1,h^u)$ gleich sind, worin e eine bilineare Paarung bezeichnet, die über die zyklischen Gruppen G1 und G2 definiert ist und Werte in der zyklischen Gruppe GT hat, und $h^u$ das von dieser Benutzervorrichtung empfangene Element bezeichnet.

**14.** Kommunikationssystem (1), umfassend:

- eine Gruppe von Benutzervorrichtungen (2-1,...2-N) nach Anspruch 10; und
- eine Verwaltungsvorrichtung (3) der Gruppe nach Anspruch 11.

**15.** Kommunikationssystem (1) nach Anspruch 14, umfassend ferner:

- eine Verifizierungsvorrichtung (4) nach Anspruch 12; und/oder
- eine Öffnungsvorrichtung (5) nach Anspruch 13.

**Claims**

1. Cryptographic method for signing a message m, by way of a user device (2-NO), on behalf of a group (G-U), said group being managed by a group manager (3) having a secret key generated based on two randoms x and y, said group having a public key formed of a plurality of elements comprising an element g and an element $g^z$ belonging to a cyclic group G1 of order p, p denoting a prime integer and z denoting a random, and an element h, an element $h^x$, an element $h^{1/z}$ and an element $h^{y/z}$ belonging to a cyclic group G2 of order p, said cryptographic signing method being **characterized in that** it comprises:

   - a step (E50) of receiving, after having proven (E20) knowledge of a secret u chosen by the user device to the group manager by way of an interactive proof of knowledge mechanism, a certificate C provided by the group manager comprising an element $S1=g^r$, an element $S2=g^{r(x+y.u)}$ and an element $S3=g^{z.r}$, where r denotes a random selected by the group manager for said user device,
   - a step (E70) of computing an element S3' based on the element S3 of the certificate provided by the group manager by raising the element S3 to the power u, said element T3 being computed in the step of generating the signature by raising the element S3' computed in the computing step to the power t; and
   - a step (F20) of generating a group signature for the message m, based on the certificate (S1, S2, S3) provided by the group manager, on a random t generated by the user device (F10), and on the secret u, said generated group signature comprising an element $T1=S1^t$, an element $T2=(S2.S1^{u.m})^t$ and an element $T3=S3^{ut}$.

2. Cryptographic signing method according to Claim 1, wherein the secret key of the group manager is formed of the randoms x and y and wherein, in order to prove knowledge of the secret u to the group manager, the user device sends the element $g^u$ to the group manager.

3. Cryptographic signing method according to Claim 1, wherein the secret key of the group manager is formed of the elements $g^x$ and $g^y$ and wherein, in order to prove knowledge of the secret u to the group manager, the user device: - receives the element $g^y$ from the group manager; and

   - computes the element $(g^y)^u$ and sends it to the group manager.

4. Cryptographic signing method according to any one of Claims 1 to 3, wherein the user device proves knowledge of the secret u to the group manager using the Schnorr algorithm.

5. Cryptographic method for providing a certificate, by way of a group manager (3), to a user device (2-N0) joining the group, said group manager having a secret key generated based on two randoms x and y, said group having a public key formed of a plurality of elements comprising an element g and an element $g^z$ belonging to a cyclic group G1 of order p, p denoting a prime integer and z denoting a random, and an element h, an element $h^x$, an element $h^{1/z}$ and an element $h^{y/z}$ belonging to a cyclic group G2 of order p, said cryptographic providing method being **characterized in that** it comprises:

   - a step (E20) of obtaining, from the user device, and by way of an interactive proof of knowledge mechanism with the user device, proof of knowledge by said user device of a secret u chosen by the user device;
   - a step (E30) of selecting a random r for the user device;
   - a step (E40) of generating a certificate (S1, S2, S3) for the user device comprising an element $S1=g^r$, an element $S2=g^{r(x+y.u)}$ and an element $S3=g^{z.r}$ ; and
   - a step (E50) of sending the generated certificate to the user device.

6. Cryptographic method for verifying a group signature comprising three elements T1, T2 and T3, and generated for a message m by a user device belonging to a group of user devices using a cryptographic signing method according to any one of Claims 1 to 4, said group having a public key formed of a plurality of elements comprising an element g and an element $g^z$ belonging to a cyclic group G1 of order p, p denoting a prime integer and z denoting a random, and an element h, an element $X=h^x$, an element $Z'=h^{1/z}$ and an element $Y'=h^{y/z}$ belonging to a cyclic group G2 of order p, x and y denoting randoms used to generate a private key of a group manager, said verifying method comprising:

   - a step (G30) of verifying the equality $e(T2,h)=e(T1,X).e(T3,Y'.Z'^m)$, where e denotes a bilinear coupling defined on the cyclic groups G1 and G2 and having values in the cyclic group GT; and
   - if said equality is verified, a step (G50) of validating the group signature.

7. Cryptographic method for opening a group signature comprising three elements T1, T2 and T3, and generated for a message m by a user device, referred to as originating device, belonging to a group of user devices using a cryptographic signing method according to any one of Claims 1 to 4, said group having a public key formed of a plurality of elements comprising an element g and an element $g^z$ belonging to a cyclic group G1 of order p, p denoting a prime integer and z denoting a random, and an element h, an element $X=h^x$, an element $Z'=h^{1/z}$ and an element $Y'=h^{y/z}$ belonging to a cyclic group G2 of order p, x and y denoting randoms used to generate a private key of a group manager, said opening method comprising:

- a step (H20) of receiving an element $h^u$ from each user device of the group of user devices, where u denotes the secret chosen by this user device to generate signatures on behalf of the group using the cryptographic signing method according to any one of Claims 1 to 5;
- a step (H30-H40) of opening the group signature, comprising identifying the user device of the group of user devices for which the term $e(T3,Z')$ and the term $e(T1,h^u)$ are equal, where e denotes a bilinear coupling defined on the cyclic groups G1 and G2 and with values in the cyclic group GT, and $h^u$ denotes the element received from this user device;

the user device at the origin of the group signature corresponding to the user device identified in the opening step.

8. Computer program (PROG) comprising instructions for executing the steps of the cryptographic signing method according to any one of Claims 1 to 4, or of the cryptographic method for providing a certificate according to Claim 6, or of the cryptographic method for verifying a signature according to Claim 7 or of the method for opening a signature according to Claim 8 when said program is executed by a computer.

9. Computer-readable recording medium on which a computer program according to Claim 8 is recorded.

10. User device (2-N0) able to sign a message m on behalf of a group, said group being managed by a group manager having a secret key generated based on two randoms x and y, said group having a public key formed of a plurality of elements comprising an element g and an element $g^z$ belonging to a cyclic group G1 of order p, p denoting a prime integer and z denoting a random, and an element h, an element $h^x$, an element $h^{1/z}$ and an element $h^{y/z}$ belonging to a cyclic group G2 of order p, said user device comprising:

- a selection module (2A), configured to choose a secret u;
- a proof module (2B), configured to prove knowledge of the secret u to the group manager; said user device being **characterized in that** it furthermore comprises:

- a reception module (2C), able to receive, after the proof module has proven knowledge of the secret u to the group manager by way of an interactive proof of knowledge mechanism, a certificate C provided by the group manager comprising an element $S1=g^r$, an element $S2=g^{r(x+y.u)}$ and an element $S3=g^{z.r}$, where r denotes a random selected by the group manager for said user device; and
- a generation module (2D), configured to generate a group signature for the message m, based on the certificate (S1, S2, S3) provided by the group manager, on a random t generated by the user device, and on the secret u, said generated group signature comprising an element $T1=S1^t$, an element $T2=(S2.S1^{u.m})^t$ and an element $T3=S3^{ut}$, said user device being configured to compute an element S3' based on the element S3 of the certificate provided by the group manager by raising the element S3 to the power u, said element T3 being computed by the signature generation module by raising the element S3' computed in the computing step to the power t.

11. Manager device (3) for managing a group of user devices, said group manager device having a secret key generated based on two randoms x and y, said group having a public key formed of a plurality of elements comprising an element g and an element $g^z$ belonging to a cyclic group G1 of order p, p denoting a prime integer and z denoting a random, and an element h, an element $h^x$, an element $h^{1/z}$ and an element $h^{y/z}$ belonging to a cyclic group G2 of order p, said manager device being **characterized in that** it comprises:

- an obtainment module (3A), configured to obtain, from a user device joining said group, and by way of an interactive proof of knowledge mechanism with the user device, proof of knowledge by said user device of a secret u chosen by the user device;
- a selection module (3B), configured to select a random r for the user device;
- a generation module (3C), configured to generate a certificate for the user device comprising an element $S1=g^r$, an element $S2=g^{r(x+y.u)}$ and an element $S3=g^{z.r}$ ; and
- a sending module (3D), configured to send the generated certificate to the user device.

12. Verification device (4), configured to verify a group signature comprising three elements T1, T2 and T3, and generated for a message m by a user device according to Claim 10 belonging to a group of user devices, said group having a public key formed of a plurality of elements comprising an element g and an element $g^z$ belonging to a cyclic group G1 of order p, p denoting a prime integer and z denoting a random, and an element h, an element $X=h^x$, an element $Z'=h^{1/z}$ and an element $Y'=h^{y/z}$ belonging to a cyclic group G2 of order p, x and y denoting randoms used to generate a private key of a group manager according to Claim 12, said verification device comprising:

- a verification module (4B), configured to verify the equality $e(T2,h)=e(T1,X).e(T3,Y'.Z'^m)$, where e denotes a bilinear coupling defined on the cyclic groups G1 and G2 and having values in the cyclic group GT; and
- a validation module (4C) for validating the group signature, activated if said equality is verified.

13. Opening device (5), configured to open a group signature comprising three elements T1, T2 and T3, and generated for a message m by a user device, referred to as originating device, belonging to a group of user devices according to Claim 10, said group having a public key formed of a plurality of elements comprising an element g and an element $g^z$ belonging to a cyclic group G1 of order p, p denoting a prime integer and z denoting a random, and an element h, an element $X=h^x$, an element $Z'=h^{1/z}$ and an element $Y'=h^{y/z}$ belonging to a cyclic group G2 of order p, x and y denoting randoms used to generate a private key of a group manager according to Claim 12, said opening device comprising:

- a reception module (5A), able to receive an element $h^u$ from each user device of the group of user devices, where u denotes the secret chosen by this user device to generate signatures on behalf of the group;
- an opening module (5C) for opening the group signature, configured to identify the user device of the group of user devices for which the term $e(T3,Z')$ and the term $e(T1,h^u)$ are equal as user device at the origin of the group signature, where e denotes a bilinear coupling defined on the cyclic groups G1 and G2 and with values in the cyclic group GT, and $h^u$ denotes the element received from this user device.

14. Communication system (1) comprising:

- a group of user devices (2-1,...2-N) according to Claim 10; and
- a manager device (3) for managing the group according to Claim 11.

15. Communication system (1) according to Claim 14, furthermore comprising:

- a verification device (4) according to Claim 12; and/or
- an opening device (5) according to Claim 13.

1

| 2-1 | | 2-N0 | | 2-N | |

2A  2B
2C  2D

········

2A  2B
2C  2D

········

2A  2B
2C  2D

G-U
(pkG-U)

3A  3B
3C  3D

3(G-U)
(sk3)

4A  4B
4C
4

5A  5B
5C
5

FIG.1

7   8   9 PROG
6   11  10

FIG.2

**2-N0**

**E10/u(N0)**

E20/g $^{u(N0)}$

**3**

**E30/r**

**E40**

E50/C(2-N0) = (S1,S2,S3)

**E60**

**E70**

# FIG.3

C'(2-N0),m

**GEN t** ~F10

**GEN SIG(m) = (T1,T2,T3)** ~F20

# FIG.4

G10 — | RX m,SIG(m) |          | OBTpkG-U | — G20

| EVAL e(T2,h) & e(T1,X) . e(T3,Y'. $Z'^m$) | — G30

non ◇ = ? — G20

oui

G60 — | SIG(m) NOK |          | SIG(m) OK | — G50

## FIG.5

H10 — | RX m,SIG(m) |          | RX $h^{u(n)}$ ∀n | — H20

| ∀n EVAL e(T3,Z') & e(T1,$h^{u(n)}$) | — H30

| ID ORIG(SIG(m)) | — H40

## FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **LAN NGUYEN et al.** *Efficient and Provably Trapdoor-free Group Signature Schemes from Bilinear Pairings,* 27 Avril 2005
- Short Randomizable Signature. **POINTCHEVAL ; SANDERS.** Proceedings of the Cryptographers Track. RSA Conference, 29 Février 2016
- **F. VERCAUTEREN INTITULÉ.** Optimal Pairings. *IEEE Transactions on Information Theory,* Janvier 2010, vol. 56 (1
- **J. SILVERMAN.** The Arithmetic of Elliptic Curves
- **C.P.SCHNORR.** Efficient Identification and signatures for smart cards. *Advances in Cryptology, CRYPTO'89, LNCS,* 1990, vol. 435, 239-252